# EUROPÄISCHE PATENTSCHRIFT

(11) **EP 2 167 848 B1**
(45) Veröffentlichungstag und Bekanntmachung des Hinweises auf die Patenterteilung: **23.02.2011**
(21) Anmeldenummer: 08784293.6
(22) Anmeldetag: 02.07.2008
(51) Int. Cl.: F16J 15/00, F16J 15/32, B23Q 11/08, F16L 27/08, B23Q 11/10

(54) **WERKZEUGMASCHINE MIT EINER DICHTUNGSVORRICHTUNG**
MACHINE TOOL COMPRISING A SEALING DEVICE
MACHINE-OUTIL POURVUE D'UN DISPOSITIF D'ETANCHEITE

(30) Priorität: 14.07.2007 DE 102007032889
(43) Veröffentlichungstag der Anmeldung: 31.03.2010
(73) Patentinhaber: MTU Aero Engines GmbH, 80995 München (DE)
(72) Erfinder: GAIL, Alfons, 86316 Friedberg (DE); BEICHL, Stefan, 82211 Herrsching (DE)
(86) Internationale Anmeldenummer: PCT/DE2008/001105
(87) Internationale Veröffentlichungsnummer: WO 2009/010040

(56) Entgegenhaltungen:
- EP-A- 1 070 888
- WO-A-03/081095
- WO-A-2006/102782

## Beschreibung

Die Erfindung betrifft eine Werkzeugmaschine mit einer Dichtungsvorrichtung für eine Kühlmittelzufuhr an einer rotierenden Spindel nach dem Oberbegriff des Patentanspruchs 1, wie beispielsweise in der Druckschrift WO 2006/102782 offenbart ist.

Für die Zuführung von Kühlschmierstoff bei rotierenden Spindeln werden so genannte Dreheinführungen verwendet, die es ermöglichen, ein Kühlmittel in die schnell rotierende Spindelwelle einzuleiten, axial durch die Spindelwelle hindurch zu fuhren und am anderen Spindelende, beispielsweise an einem Werkzeug bzw. an einem Werkstück auszuleiten. Derzeit werden zur Abdichtung dieser Kühlinittelzufiühnmgen Gleitlagerringe aus Keramik bzw. Keramikdichtscheiben verwendet. Diese Keramikdichtscheiben unterliegen im Betrieb relativ starkem Verschleiß, sind sehr teuer und können plötzlich ohne Vorwarnung versagen. Beim Versagen derartiger Dichtungen dringt Kühlflüssigkeit in den Spindelmotor ein, was zu einem Totalschaden an der Spindel führen kann.

Derartige Dreheinführungen für die Zuführung von Kühlschmierstoff bei rotierenden Spindeln mit Keramikdichtscheiben sind beispielsweise aus der JP 09196265 A oder der DE 10349968 A1 hinreichend bekannt.

Zwar ist aus der WO 03/081095 A1 eine Hauptabdichtung für Spindelwellen bekannt, welche als Bürstendichtung ausgeführt ist. Diese dient jedoch lediglich als einfache Abdichtung gegen den Auslauf von Schmiermittel und das Eindringen von Schmutzpartikeln. Eine funktionierende Dichtung für eine Dreheinführung wird darin nicht angegeben.

Die Druckschrift EP 1 070 888 A2 offenbart eine Vorrichtung mit rotierenden Spindel, auf der eine erste Bürstendichtung und eine zweite Bürstendichtung hintereinander in Reihe angeordnet sind. Außerhalb dieses von den Bürstendichtungen eingeschlossenem Volumens wird einerseits mit Wasserstoff und andererseits mit Öl gekühlt. Zwischen den Bürstendichtungen ist eine Kühlmittelleckage angeordnet.

Der Erfindung liegt daher die Aufgabe zugrunde, eine Werkzutigmaschitie mit einer im Betrieb rotierenden Spindel zu schaffen, bei der durch die Spindel Kühlmittel leitbar ist und die betriebssicher ist. Insbesondere ist es Aufgabe der vorliegenden Erfindung, eine zuverlässige Abdichtung der Zuführung von Kühlmittel zu einer schnell drehenden Werkzeugspindel zur Verfügung zu stellen, die die Gefahr eines plötzlichen Versagens mindert und dennoch kostengünstig in Herstellung und Montage ist.

Diese Aufgabe wird erfindungsgemäß durch eine Vorrichtung mit den Merkmalen des Patentanspruchs 1 gelöst. Vorteilhafte Ausführungsfbrmen und Weiterbildungen der Erfindung sind in den Unteransprüchen angegeben.

Durch die Erfindung werden technische Probleme des Standes der Technik vermieden und eine verbesserte Vorrichtung zur Verfügung gestellt, die eine zuverlässige Abdichtung der Zuführung von Kühlmittel zu einer schnell drehenden Werkzeugspiiidel ermöglicht, die die Gefahr eines plötzlichen Versagens zumindest reduziert und die dennoch kostengünstig in Herstellung und Montage ist.

Die erfindungsgemäße Werkzeugmaschine mit einer Kühlinittelzuführeinrichtung, welche eine sich durch die Spindel erstreckende Kanaleinrichtung mit wenigstens einem Kanal für Kühlmittel aufweist, und einer Dichtungsvorrichtung für eine Kühlmittelzufuhr an einer rotierenden Spindel weist eine erste Bürstendichtung und eine zweite Bürstendichtung auf der Spindel auf, die hintereinander in Reihe angeordnet sind. Hierdurch wird eine erste Kammer gebildet, in der sich das wenige Kühlmittel, welches durch die erste Bürstendichtung hindurchtritt sammelt. Insgesamt wird hierdurch eine kostengünstige und zuverlässige Alternative zu den bisher verwendeten Keramikdichtungen geboten. Die Bürstendichtungen können dabei Borsten aus Metall oder Kunstfasern, aus elektrisch leitendem oder nichtleitendem Material oder eine Kombination dieser Materialien ausweisen. Dabei können Materialkombinationcn sowohl in einer Bürstendichtung als auch durch unterschiedliche Materialien der ersten und der zweiten Bürstendichtung erreicht werden. Dabei ist zwischen der ersten Bürstendichtung und der zweiten Bürstendichtung eine RückFtihreinrichtung der Kühlmittelleckage vorgesehen. Dadurch kann das in der ersten Kammer gesammelte Kühlmittel dem Kühlkreislauf wieder zugeführt werden. Durch Beobachtung von Volumenschwankungen in der Kammer bzw. am Ende des Rückführungskanals lassen sich Rückschlüsse auf den Verschweiß der Bürstendichtungen ziehen.

Eine vorteilhafte Ausführungsform der Erfindung sieht vor, dass eine dritte Bürstendichtung in Reihe mit der ersten und der zweiten Bürstendichtung vorgesehen ist. Diese Bürstendichtung dient der Bildung einer zweiten Kammer, in der sich bei Verschleiß der ersten bzw. zweiten Bürstendichtung Kühlmittel sammelt.

Eine vorteilhafte Ausführungsform der Erfindung sieht vor, dass zwischen der zweiten Bürstendichtung und der dritten Bürstendichtung eine zweite Rückführeinrichtung der Kühlmittelleckage vorgesehen ist. Bei voller Funktion der ersten und zweiten Bürstendichtung weist die zweite Rücktühreinrichtung keine Leckage auf. Sollten sich durch Verschließ der zweiten Bürstendichtung im Laufe der Betriebszeit kleine Leckage bilden, wird insbesondere dem Bediener signalisiert, wenn die Bürstendichtungen aufgrund von Verschleiß ausgewechselt werden müssen. Ein plötzliches Versagen durch Bruch tritt hier nicht auf. Insbesondere bei einer derartigen Weiterbildung ist der Spindelmotor durch die zweifache Absicherung gegen Einbruch des Kühlmittels optimal oder sehr gut geschützt.

Eine vorteilhafte Ausführungsform der Erfindung sieht vor, dass an der zweiten Rückführeinrichtung der Kühlmittelleckage ein Sensor zur Anzeige des Dichtungsverschleißes vorgesehen ist. Dieser Sensor kann beispielsweise als Flüssigkeitsstandmesser mit entsprechender Anzeige ausgebildet sein.

Eine vorteilhafte Ausführungsform der Erfindung sieht vor, dass die Bürstendichtungen aus Kevlar hergestellt sind. Bürstendichtungen mit Kevlarfasern sind hervorragend zum Dichten gegen Kühlmittel geeignet, da sie korrosions- und temperaturbeständig sind und einen sehr geringen Verschleiß aufweisen.

Eine vorteilhafte Ausführungsform der Erfindung sieht vor, dass die Spindel eine Werkzeugspindel ist. Insbesondere bei Werkzeugspindeln in Revolver-CNC-Maschinen sind aufgrund der hohen Spindelanzahl verschleißarme und kostengünstige Lösungen von Vorteil. Aber auch bei einfachen Werkzeugmaschinen wie Drehmaschinen oder Fräsen wird eine Verbesserung der Zuverlässigkeit und der Wartungsfreundlichkeit erzielt.

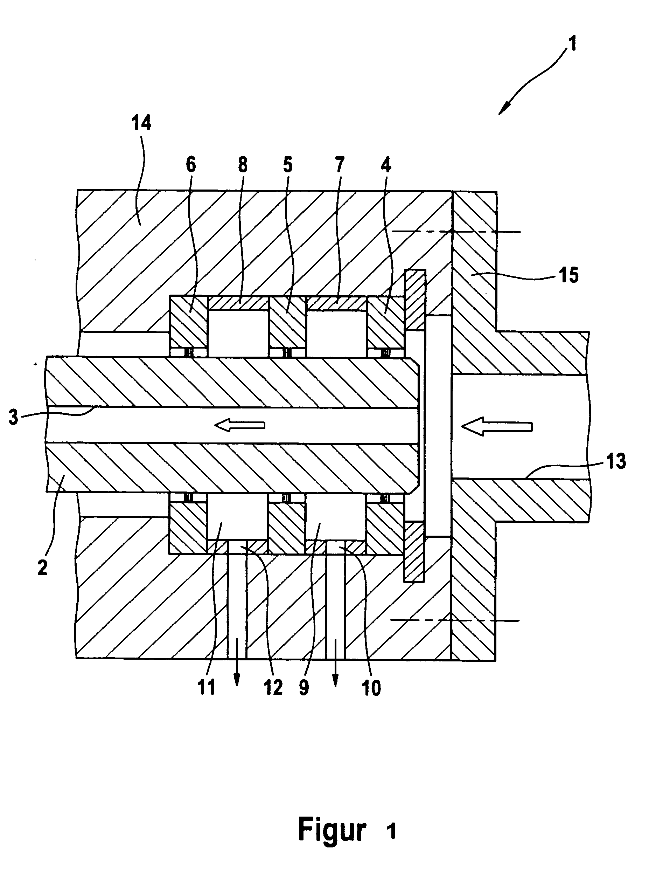

Weitere die Erfindung verbessernde Maßnahmen werden nachstehend gemeinsam mit der Beschreibung eines bevorzugten Ausführungsbeispiels der Erfindung anhand der Figur näher dargestellt. Die Figur zeigt:
- Figur: eine schematische Darstellung einer vorteilhaften Ausführungsform einer Dreheinführung gemäß der vorliegenden Erfindung.

Die schematische Schnittdarstellung gemäß der Figur zeigt eine vorteilhafte Ausführungsform einer Dreheinführung 1 gemäß der vorliegenden Erfindung. Darin ist eine als Werkzeugspindel ausgebildete Spindel 2 mit einer Kühlmittelbohrung 3 dargestellt, in welcher der Kühlmittelfluss zu einem nicht gezeigten Werkzeug bzw. Werkstück mit einem Pfeil von rechts nach links angedeutet ist.

Die Spindel 2 ist konzentrisch in einem aus Gussmaterial hergestellten Spindelgehäuse 14 gelagert. Die Spindel 2 weist an ihrem in der Zeichnung rechten Ende eine über den Innenumfang des Spindelgehäuses 14 angeordnete und in einer spanend bearbeiteten Ausnehmung darin aufgenommen erste Bürstendichtung 4 und eine davon in axialer Richtung durch eine erste Distanzbuchse 7 beabstandete zweite Bürstendichtung 5 auf. Zwischen der ersten Bürstendichtung 4 und der zweiten Bürstenddichtung 5 wird so eine erste ringförmige Kammer 9 gebildet. Am in der Zeichnungsebene unteren Ende der ersten Kammer 9 ist ein als Bohrung durch die aus Messing hergestellte Distanzbuchse 7 und das Spindelgehäuse 14 ausgestalteter Rückführkanal 10 vorgesehen.

An die zweite Bürstendichtung schließt sich eine dritte Bürstendichtung 6 an, die durch eine zweite Distanzbuchse 8 beabstandet ist. Auch hier ist zwischen der zweiten Bürstendichtung 5 und der dritten Bürstendichtung 6 eine zweite ringförmige Kammer 11 gebildet. Am unteren Ende der zweiten Kammer 11 ist ein als Bohrung durch die Distanzbuchse 8 und das Spindelgehäuse 14 ausgestalteter Rückführkanal 12 vorgesehen.

Der durch die Bürstendichtungen 4, 5, 6 und die Distanzbuchsen 7, 8 gebildete Verband wird durch einen Sicherungsring gegen einen Gehäuseabsatz gehalten.

Am rechten Ende des Spindelgehäuses 14 ist eine im wesentlichen kreisförmige Gehäuseabdeckung 15 mit einer konzentrischen Zuleitung 13 vorgesehen. Die Zuleitung 13 ist dabei als Druckleitung für das unter Druck stehende Kühlmittel ausgebildet.

Die Bürstendichtungen sind dabei aus Borsten hergestellt, die in einer als Haltering ausgebildeten Fassung angeordnet sind. Die Borsten können dabei gerade oder schräg ausgerichtet sein. Die Borsten können geklemmt oder durch ein Aushärtmaterial, wie beispielsweise ein Kunstharz, festgelegt sein. Im vorliegenden Ausführungsbeispiel sind die Bürstendichtungen mit gerade ausgerichteten Kevlarborsten versehen.

Im Betrieb strömt Kühlmittel in der Zuleitung 13 in Pfeilrichtung von rechts nach links in das Spindelgehäuse 14. Dabei steht das Kühlmittel unter hohem Druck, im vorliegenden Ausführungsbeispiel unter einem Druck von 100 bar. Die erste Bürstendichtung 4 dichtet unter einer geringen Leckage das gesamte Druckgefälle. Somit strömt das Kühlmittel im wesentlichen in die Kühlmittelbohrung 3 in der Spindel 2.

Die sich in der ersten Kammer 9 zwischen der ersten Bürstendichtung 4 und der zweiten Bürstendichtung 5 sammelnde Kühlflüssigkeit wird in das Maschinenbett zurück geleitet.

Aus der zweiten Kammer 11 zwischen der zweiten Bürstendichtung 5 und der dritten Bürstendichtung 6 tritt hingegen im normalen Betrieb keine merkliche Leckage auf. Der Bediener erkannt hier bei Auftreten von merklicher Leckage die Notwendigkeit eines Dichtungswechsels, da nur bei entsprechendem Dichtungsverschleiß ein entsprechendes Leckagevolumen auftritt. Die Erfassung und Anzeige eines entsprechenden Leckagevolumens kann hier durch einen nicht gezeigten Sensor erfolgen. Ein plötzliches Dichtungsversagen kann hier jedoch nicht auftreten.

Die in der Fig. gezeigte Gestaltung ist insbesondere eine beispielhafte erfindungsgemäße Werkzeugmaschine in teilweiser Ansicht mit einer beispielhaften erfindungsgemäßen Dichtungsvorrichtung.

Die vorliegende Erfindung beschränkt sich in ihrer Ausführung nicht auf das vorstehend angegebene bevorzugte Ausführungsbeispiel. Vielmehr ist eine Anzahl von Varianten denkbar, welche von der in den Ansprüchen dargestellten Lösung auch bei grundsätzlich anders gearteten Ausführungen Gebrauch macht.

## Patentansprüche

1. Werkzeugmaschine mit einer drehbar gelagerten und im Betrieb der Werkzeugmaschine drehenden Spindel (2) und mit einer Kühlmittelzufuhreinrichtung, welche eine sich durch die Spindel (2) erstreckende Kanaleinrichtung mit wenigstens einem Kanal für Kühlmittel aufweist, wobei zur Abdichtung der im Betrieb drehenden Spindel (2) gegenüber einem gegenüber der Spindel (2) im Betrieb relativ bewegten, insbesondere gegenüber einem Maschinenbett fest angeordneten, Bauteil eine Dichtungsvorrichtung vorgesehen ist, die eine erste Bürstendichtung (4) und eine zweite Bürstendichtung (5) auf der Spindel (2) hintereinander in Reihe angeordnet aufweist,
**dadurch gekennzeichnet, dass**
zwischen der ersten Bürstendichtung (4) und der zweiten Bürstendichtung (5) eine Rückführeinrichtung (10) für die Kühlmittclleckagc vorgesehen ist.

2. Werkzeugmaschine nach Anspruch 1, **dadurch gekennzeichnet, dass** die Dichtungsvorrichtung wenigstens eine weiter Dichtung, insbesondere eine Labyrinth- oder Gleitringdichtung, aufweist.

3. Werkzeugmaschine nach einem der Ansprüche 1 und 2, **dadurch gekennzeichnet, dass** eine Zuführeinrichtung für das Zuführen von Kühlmittel von radial außen vorgesehen ist, wobei zwei Rückführeinrichtungen für das Rückführen von Kühlmittel nach radial außen vorgesehen ist.

4. Werkzeugmaschine nach einem der vorangehenden Patentansprüche,
**dadurch gekennzeichnet, dass**
eine dritte Bürstendichtung (6) in Reihe mit der ersten und der zweiten Bürstendichtung (4,5) vorgesehen ist.

5. Werkzeugmaschine nach Patentanspruch 4,
**dadurch gekennzeichnet, dass**
zwischen der zweiten Bürstendichtung (5) und der dritten Bürstendichtung (6) eine zweite Rückführeinrichtung (12) für die Kühlmittelleckage vorgesehen ist.

6. Werkzeugmaschine nach Patentanspruch 5,
**dadurch gekennzeichnet, dass**
an der zweiten Rückführeinrichtung (12) für die Kühlmittelleckage ein Sensor zur Anzeige des Dichtungsverschleißes vorgesehen ist.

7. Werkzeugmaschine nach einem der vorangehenden Patentansprüche,
**dadurch gekennzeichnet, dass**
die Bürstendichtungen (4, 5, 6) aus Kevlar hergestellt sind.

8. Werkzeugmaschine nach einem der vorangehenden Patentansprüche,
**dadurch gekennzeichnet, dass**
die Spindel (2) eine Werkzeugspindel ist.

## Claims

1. A machine tool having a spindle (2) that is rotatably mounted and rotates during operation of the machine tool and having a coolant-supply device which has a channel device extending through the spindle (2) with at least one channel for coolant, wherein in order to seal the spindle (2), which rotates during operation, with respect to a component which during operation is moved relatively with respect to the spindle (2) and in particular is fixedly arranged with respect to a machine bed, there is provided a sealing device which has a first brush seal (4) and a second brush seal (5) arranged one after the other in series on the spindle (2),
**characterised in that**
a return device (10) for the coolant leakage is provided between the first brush seal (4) and the second brush seal (5).

2. A machine tool according to claim 1,
**characterised in that**
the sealing device has at least one further seal, in particular a labyrinth or sliding-ring seal.

3. A machine tool according to one of claims 1 and 2,
**characterised in that**
a supply device is provided for the supply of coolant radially from outside, wherein two return devices are provided for the return of coolant radially outwards.

4. A machine tool according to one of the preceding claims,
**characterised in that**
a third brush seal (6) is provided in series with the first and the second brush seal (4, 5).

5. A machine tool according to claim 4,
**characterised in that**
a second return device (12) for the coolant leakage is provided between the second brush seal (5) and the third brush seal (6).

6. A machine tool according to claim 5,
**characterised in that**
a sensor for indicating the wear of the seal is provided on the second return device (12) for the coolant leakage.

7. A machine tool according to one of the preceding claims,
**characterised in that**
the brush seals (4, 5, 6) are produced from Kevlar.

8. A machine tool according to one of the preceding claims,
**characterised in that**
the spindle (2) is a tool spindle.

## Revendications

1. Machine-outil avec une broche (2) montée de manière à pouvoir tourner et rotative en cours de fonctionnement de la machine-outil, et avec un système d'alimentation en réfrigérant qui comporte un système de canal s'étendant au travers de la broche (2) avec au moins un canal pour le réfrigérant, où, pour l'étanchéité de la broche (2) rotative en cours de fonctionnement par rapport à un composant déplacé relativement à la broche (2) en cours de fonctionnement, en particulier un composant fixement disposé relativement à un banc de machine, il est prévu un système de joint comportant un premier joint à brosse (4) et un deuxième joint à brosse (5) sur la broche (2) disposés en ligne l'un derrière l'autre, **caractérisée en ce qu'**entre le premier joint à brosse (4) et le deuxième joint à brosse (5), il est prévu un système de recyclage (10) des fuites de réfrigérant.

2. Machine-outil selon la revendication 1, **caractérisée en ce que** le système de joint comporte au moins un autre joint, en particulier un joint labyrinthe ou un joint rotatif.

3. Machine-outil selon l'une des revendications 1 et 2, **caractérisée en ce qu'**il est prévu un système d'alimentation pour la conduction radiale de réfrigérant depuis l'extérieur, deux systèmes de recyclage pour la reconduction radiale vers l'extérieur du réfrigérant étant prévus le cas échéant.

4. Machine-outil selon l'un des revendications précédentes, **caractérisée en ce qu'**un troisième joint à brosse (6) est prévu, disposé en ligne avec le premier et le deuxième joints à brosse (4, 5).

5. Machine-outil selon la revendication 4, **caractérisée en ce qu'**un deuxième système de recyclage (12) pour les fuites de réfrigérant est prévu entre le deuxième joint à brosse (5) et le troisième joint à brosse (6).

6. Machine-outil selon la revendication 5, **caractérisée en ce qu'**un capteur pour l'indication de l'usure de joint est prévu sur le deuxième système de recyclage (12) pour les fuites de réfrigérant.

7. Machine-outil système selon l'une des revendications précédentes, **caractérisée en ce que** les joints à brosse (4, 5, 6) sont fabriqués en Kevlar.

8. Machine-outil selon l'une des revendications précédentes, **caractérisée en ce que** la broche (2) est une broche porte-outil.
